# EUROPÄISCHE PATENTSCHRIFT

(11) **EP 2 387 322 B1**
(45) Veröffentlichungstag und Bekanntmachung des Hinweises auf die Patenterteilung: **30.04.2014**
(21) Anmeldenummer: 10700953.2
(22) Anmeldetag: 19.01.2010
(51) Int. Cl.: A23G 1/56, A23G 1/40, A23G 1/30

(54) **STABILITÄTSVERBESSERTE SCHOKOLADENZUSAMMENSETZUNGEN AUF REISSTÄRKEBASIS**
STABILITY-IMPROVED CHOCOLATE COMPOSITIONS ON THE BASIS OF RICE STARCH
COMPOSITIONS DE CHOCOLAT À STABILITÉ AMÉLIORÉE À BASE D'AMIDON DE RIZ

(30) Priorität: 19.01.2009 DE 102009005928
(43) Veröffentlichungstag der Anmeldung: 23.11.2011
(73) Patentinhaber: Südzucker AG Mannheim/Ochsenfurt, 68165 Mannheim (DE)
(72) Erfinder: KOWALCZYK, Jörg, 67304 Eisenberg/Steinborn (DE); DÖRR, Tilmann, 67591 Hohen-Sülzen (DE); WILLIBALD-ETTLE, Ingrid, 76829 Landau (DE); FRANCK, Christine, B-3530 Houthalen (BE); WOUTERS, Rudy, B-2260 Westerlo (BE)
(74) Vertreter: Schrell, Andreas
(86) Internationale Anmeldenummer: PCT/EP2010/000293
(87) Internationale Veröffentlichungsnummer: WO 2010/081748

(56) Entgegenhaltungen:
- EP-A1- 1 759 591
- EP-A2- 0 204 941
- EP-A2- 0 522 704
- WO-A1-92/13465
- WO-A1-2008/009061
- US-A- 2 850 388
- US-A- 4 189 502
- US-A- 6 010 735

## Beschreibung

Die vorliegende Erfindung betrifft verbesserte Schokoladenzusammensetzungen, Verfahren zu deren Herstellung sowie diese enthaltende Produkte.

Die Hauptbestandteile von Schokolade sind Zucker, Kakao und Lecithin. Durch Variation des Kakaoanteils sowie Verwendung von Milchpulver werden die hellen Schokoladen oder Milchschokoladen und durch extrem hohe Kakaoanteile die dunklen Produkte hergestellt. Die Verwendung weiterer Inhaltsstoffe wie Haselnüsse, Früchte und bestimmte Aromatisierungen liefern weiterer Spezialvarianten.

Zur Herstellung von Schokolade existieren verschiedene technische Verfahren. Das Crumb-Verfahren (z. B. EP 0 317 917 B1), bei dem die Rohstoffe direkt verarbeitet werden, liefert weniger hochwertige Produkte. Das Conchieren, bei dem über mehrere Stunde durch Bewegen der Schokoladenmasse ein optimiertes Aromaprofil ausbildet wird, liefert sensorisch betrachtet, die besten Ergebnisse. Auch die Herstellung von sogenannten kalorienreduzierten Schokoladen mit Isomalt, Maltit, Lactit, Inulin oder Polydextrose, wie sie in der EP 0 512 910 B1 beschrieben ist, liefert durch Conchieren sensorisch gute Schokoladen. Auch die Herstellung von Schokoladen mit anderen Kohlenhydraten, wie Isomaltulose, führt zu akzeptablen Produkten.

Der Stand der Technik ist sich darin einig, dass sowohl für die Herstellung der Schokolade als auch deren Qualitätsmerkmale die Abwesenheit von freiem Wasser wesentlich ist. Freies Wasser führt zur Agglomeratbildung der Kohlenhydrate und verleiht der Schokolade einen "sandigen Geschmack".

Auch flüssige Schokoladen sind bekannt. Zur Herstellung von flüssiger Schokolade wird Schokolade in der Regel in Milch aufgeschmolzen und unter Verwendung von Stärke auf die entsprechende trinkfähige Konsistenz eingestellt. Die Schokolade wird heiß verzehrt und würde beim Abkalten zur Separation neigen.

Pastöse, also halbfeste, oder flüssige Schokoladenformulierungen sind auch für spezielle Anwendungen wie Glasuren von Interesse.

Oft werden hier hohe Fettmengen eingesetzt, um die entsprechende Konsistenz einzustellen. Bestimmte flüssige Schokoladenzusammensetzung sind häufig nicht lagerstabil, d. h. neigen zum Separieren ihrer Komponenten, bzw. weisen mikrobiologische Instabilität auf. Das Geschmacksprofil ist häufig verbesserungsfähig und/oder die Konsistenz wird vom technologischen oder organoleptischen Standpunkt als unbefriedigend empfunden.

So offenbart die WO 92/13465 A1 Stärke-haltige Schokoladengemische, die als fettreduzierte gefrorene Dessertprodukte Verwendung finden. Die WO 2008/009061 A1, US 2,850 388 A und EP 1 759 591 A1 offenbaren weitere Reisstärke-haltige Zusammensetzungen zur Verwendung als Aufstriche, Glasuren oder Cremes.

Das der vorliegenden Erfindung zugrunde liegende technische Problem ist die Bereitstellung von Verfahren und Produkten, die die vorgenannten Nachteile überwinden. Insbesondere ist das der vorliegenden Erfindung zugrunde liegende technische Problem die Bereitstellung einer halbfesten oder flüssigen Schokoladenzusammensetzung sowie diese enthaltende Produkte, die sich durch eine geschmeidigere Konsistenz und Haftfähigkeit der Schokoladenzusammensetzung, ein verbessertes Geschmacksprofil, eine bessere Verarbeitbarkeit und/oder eine verbesserte Lagerstabilität, auch in mikrobiologischer Hinsicht auszeichnen.

Die vorliegende Erfindung löst das ihr zugrunde liegende technische Problem durch die Bereitstellung einer halbfesten oder flüssigen Schokoladenzusammensetzung, enthaltend 40 bis 80 Gewichts-% einer mindestens eine Kakaokomponente und mindestens ein süßendes Agens enthaltenden Schokoladengrundmasse, 0,5 bis 10 Gewichts-% Reisstärke und 20 bis 50 Gewichts-% Wasser (jeweils bezogen auf Gesamtgewicht der Schokoladenzusammensetzung) hergestellt durch a) Bereitstellen einer Schokoladengrundmasse sowie eines Reisstärkegels und b) Einbringen des Reisstärkegels in die Schokoladengrundmasse und Mischen der beiden Komponenten, wobei eine homogene, halbfeste oder flüssige Schokoladenzusammensetzung erhalten wird und wobei das Einbringen des Reisstärkegels portionsweise und sequentiell erfolgt.

Die vorliegende Erfindung löst das ihr zugrunde liegende technische Problem auch durch die Bereitstellung eines Verfahrens zur Herstellung einer halbfesten oder flüssigen Schokoladenzusammensetzung gemäß der vorliegenden Erfindung, wobei in einem ersten Verfahrensschritt eine aufgeschmolzene Schokoladengrundmasse und ein Reisstärkegel bereitgestellt und in einem zweiten Verfahrensschritt das Reisstärkegel in die aufgeschmolzene Schokoladengrundmasse eingebracht und zu einer homogenen Mischung vermischt wird, wobei eine homogene, halbfeste oder flüssige Schokoladenzusammensetzung erhalten wird, wobei das Reisstärkegel portionsweise und sequentiell in die Schokoladengrundmasse eingearbeitet wird.

Die vorliegende Erfindung stellt also die Lehre bereit, eine Schokoladenzusammensetzung in halbfester oder flüssiger Form bereitzustellen, die sich durch einen Anteil an Reisstärke, insbesondere durch den Einsatz von Reisstärkegel bei der Herstellung der Schokoladenzusammensetzung, sowie durch einen, vorzugsweise mit dem Gelcharakter des Reisstärkegels verbundenen, im Vergleich zu konventionellen Schokoladenzusammensetzungen erhöhten Wassergehalt auszeichnet. Der Einsatz des Reisstärkegels zur Herstellung der halbfesten oder flüssigen Schokoladenzusammensetzung führt zu besonders geschmeidigen, gut herstellbaren und besonders gut auf andere Produkte, z. B. Lebensmitteln, wie Backwaren, aufbringbaren Schokoladenzusammensetzungen, die sich darüber hinaus durch eine verbesserte Lagerstabilität, insbesondere Stabilität gegen Entmischung oder mikrobiologischem Abbau im Vergleich zu konventionell hergestellten halbfesten oder flüssigen Schokoladenzusammensetzungen auszeichnen. Die so hergestellten halbfesten oder flüssigen Schokoladenzusammensetzungen sind unmittelbar einsatzfähig, insbesondere in flüssiger Form trinkfertig oder in halbfester Form streich- bzw. glasurfertig. Die hergestellten Schokoladenzusammensetzungen zeichnen sich bei Verwendung auf Lebensmittelprodukten, z. B. Kuchen oder anderen Backwaren, durch eine gleichmäßige und gute Verteilbarkeit und Haftbarkeit aus. Darüber hinaus zeichnen sich die erfindungsgemäßen halbfesten oder flüssigen Schokoladenzusammensetzungen durch einen vorteilhaften, besonders cremigen und vollen Geschmack aus.

Im Zusammenhang mit der vorliegenden Erfindung wird unter einer halbfesten Schokoladenzusammensetzung insbesondere eine pastöse Schokoladenzusammensetzung verstanden.

In besonders bevorzugter Ausführungsform ist die Schokoladengrundmasse eine Masse, die mindestens ein süßendes Agens und mindestens eine Kakaokomponente, sowie in bevorzugter Ausführungsform mindestens einen Zusatzstoff, z. B. einen Emulgator, aufweist. In besonders bevorzugter Ausführungsform weist die erfindungsgemäß eingesetzte Schokoladengrundmasse mindestens eine Milchkomponente als Zusatzstoff auf. In einer besonders bevorzugten Ausführungsform weist die Schokoladengrundmasse neben der mindestens einen Kakaokomponente, dem mindestens einen süßenden Agens, dem optionalen mindestens einen Emulgator, optional mindestens eine Milchkomponente auf.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind, aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen.

Die Schokoladengrundmasse der Erfindung ist in bevorzugter Ausführungsform eine Schokoladengrundmasse, die 9 bis 60 Gew.-% mindestens einer Kakaokomponente, vorzugsweise 20 bis 30 Gew.-% (jeweils bezogen auf das Gesamttrockengewicht der Schokoladengrundmasse) einer Kakaokomponente sowie 1 bis 40 Gew.-% (bezogen auf das Gesamttrockengewicht der Schokoladengrundmasse) mindestens eines Zusatzstoffes und 20 bis 90 Gew.-%, vorzugsweise 20 bis 50 Gew.-% oder 50 bis 80 Gew.-% (jeweils bezogen auf das Gesamttrockengewicht der Schokoladengrundmasse) mindestens eines süßenden Agens enthält. In besonders bevorzugter Ausführungsform ist vorgesehen, dass in der Schokoladengrundmasse 35 bis 75 Gew.-% Isomaltulose (bezogen auf das Gesamttrockengewicht der Schokoladengrundmasse) vorhanden sind.

Die Erfindung sieht in bevorzugter Ausführungsform vor, dass als Kakaokomponente in besonders bevorzugter Ausführungsform Kakaopulver, insbesondere entfettetes oder entöltes Kakaopulver, eingesetzt wird.

Im Zusammenhang mit der vorliegenden Erfindung werden unter Zusatzstoffen solche Stoffe verstanden, die der erfindungsgemäß eingesetzten Schokoladengrundmasse zusätzlich zu dem süßenden Agens und der Kakaokomponente hinzugegeben werden können. Demgemäß sind die Zusatzstoffe optional einzusetzende Stoffe und die Erfindung erfasst sowohl erfindungsgemäße Schokoladengrundmasse, die diese Stoffe oder eine Auswahl davon aufweisen ebenso wie Schokoladengrundmasse, die keine oder nicht alle der genannten Zusatzstoffe aufweisen. Die Verwendung der Zusatzstoffe kann je nach Anwendungsgebiet und Anforderungsprofil der Märkte und der Konsumenten individuell zusammengestellt werden.

Im Zusammenhang mit der vorliegenden Erfindung wird unter einem Zusatzstoff zum Beispiel auch ein Präbiotikum, welches in vorteilhafter Weise die ernährungsphysiologischen Eigenschaften der Schokoladengrundmasse positiv beeinflusst, ein Intensivsüßstoff, ein Zucker oder ein Zuckeraustauschstoff, welche die Süßkraft der Schokoladengrundmasse beeinflussen, eine fetthaltige Komponente oder ein Milcherzeugnis, welche insbesondere die Art und den Geschmack des erzielten Getränkes beeinflussen, oder ein Ergänzungsstoff verstanden.

Unter einem Ergänzungsstoff werden solche Stoffe verstanden, die insbesondere das Aussehen, den Geschmack, die Organoleptik, den Nährwert, ernährungsphysiologische Eigenschaften, die Verarbeitbarkeit, Lagerfähigkeit oder Gebrauchsfertigkeit der Schokoladengrundmasse betreffen.

In einer weiteren bevorzugten Ausführungsform ist also vorgesehen, dass der mindestens eine Zusatzstoff als Präbiotikum, vorzugsweise Inulin, Polydextrose, Oligofructose oder Galactooligosaccharid ausgeführt ist.

Im Zusammenhang mit der vorliegenden Erfindung wird unter einem Präbiotikum ein Zusatzstoff verstanden, der selektiv das Wachstum und/oder die Aktivität spezifischer Bakterien im menschlichen oder tierischen Verdauungstakt, insbesondere Bifidobakterien und/oder Lactobacillen so stimuliert, dass gesundheitsfördernde Effekte zu erwarten sind oder auftreten.

Im Zusammenhang mit der vorliegenden Erfindung wird unter einem "Probiotikum" eine lebende mikrobielle Zusatzkomponente verstanden, die durch Stabilisierung oder Verbesserung der mikrobiellen Zusammensetzung im Verdauungstrakt des menschlichen oder tierischen Konsumenten dessen Gesundheit fördert. Derartige probiotische Mikroorganismen, die in Lebens-, Arznei- oder Futtermitteln eingesetzt werden können, sind zum Beispiel: Bifidobacterium wie Stämme *B. adolescentis, B. animalis, B. bifidum, B. longum, B. thermophilum; Enterococccus; Lactobacillus* wie die Stämme *Lb. acidophilus, Lb. brevis, Lb, casei, Lb. cellobiosus, Lb. crispatus, Lb. delbrueckii subsp. Bulgaricus, Lb. fermentum, Lb. GG, Lb. johnsonii, Lb. lactis, Lb. plantarum, Lb. reuteri, Lb. rhamnosus, Lb. salivarius; Bacillus cereus toyoi; Bacillus cereus; Leuconostoc; Pediococcus acidilactici; Propionibacterium; Streptococcus* wie die Stämme *S*. *cremoris, S. infantarius, S. intermedius, S. lactis, S. salivarius subsp. thermophilus* (vergleiche Fuller, J. Appl. Bacteriol. (1989)). Bevorzugte Probiotika sind Bakterien der Gattungen *Lactobacillus* und *Bifido-bacterium.*

Im Zusammenhang mit der vorliegenden Erfindung wird unter "Synbiotikum" ein Gemisch aus mindestens einem Präbiotikum und mindestens einem Probiotikum verstanden, das durch Verbesserung der Überlebensrate und Erhöhung der Anzahl gesundheitsfördernder lebender mikrobieller Organismen im Gastrointestinal-Trakt die Gesundheit des menschlichen oder tierischen Konsumenten fördert, insbesondere durch selektive Stimulierung des Wachstums und/oder der Stoffwechsel-Aktivität der mikrobiellen Organismen.

In einer weiteren bevorzugten Ausführungsform ist vorgesehen, dass der mindestens eine Zusatzstoff als Probiotikum, vorzugsweise Bifidobakterien oder Lactobakterien ausgeführt ist. Derartige probiotische Bakterienkulturen können bevorzugt als Trockenkulturen oder Dauerkulturen ausgeführt sein. In einer weiteren bevorzugten Ausführungsform ist vorgesehen, Symbiotika, das heißt Mischungen von Probiotika und Präbiotika, einzusetzen.

Die Erfindung sieht auch vor, dass der mindestens eine Zusatzstoff als fetthaltige Komponente, zum Beispiel Kakaomasse, gehärtetes oder ungehärtetes Pflanzenfett, z. B. Palmöl, oder ähnliches, zum Beispiel auch Fettersatzstoff, ausgeführt ist.

Die Erfindung sieht in einer weiteren bevorzugten Ausführungsform vor, dass der mindestens eine Zusatzstoff als Milcherzeugnis, insbesondere lactosefreies Milcherzeugnis, zum Beispiel Magermilchpulver, Vollmilchpulver, lactosefreies Mager- oder Vollmilchpulver, Molkenextrakt, Molkenerzeugnis ausgeführt ist. In dieser Ausführungsform, also einer Schokoladengrundmasse enthaltend mindestens ein süßendes Agens, ein Milcherzeugnis und eine Kakaokomponente, ist bevorzugt vorgesehen, das Milcherzeugnis in einer Menge von 20 bis 40 Gew.-% (bezogen auf das Gesamtgewicht der Schokoladengrundmasse) einzusetzen. Insbesondere in dieser letztgenannten Ausführungsform ist bevorzugt vorgesehen, das süßende Agens in einer Menge von 20 bis 50 Gew.-% (bezogen auf das Gesamtgewicht der Schokoladengrundmasse) einzusetzen.

Die Erfindung sieht in einer besonders bevorzugten Ausführungsform vor, dass der mindestens eine Zusatzstoff als Ergänzungsstoff ausgeführt ist und aus der Gruppe bestehend aus Aromastoffen, Farbstoffen, Geschmacksstoffen, Mineralstoffen wie Natrium oder Calzium, insbesondere Salzen wie Natriumchlorid, Vitaminen, Folsäure, Emulgatoren, Lecithin, Ballaststoffen, Omega-3-Fettsäuren, Triglyzerin mittlerer Kettenlängen, Phythoöstrogene und Ascorbinsäuresalze oder Kombinationen davon ausgewählt ist. In bevorzugter Ausführungsform enthält die erfindungsgemäße Schokoladengrundmasse zum Beispiel als Aromastoff Vanillin.

In einer weiteren bevorzugten Ausführungsform ist vorgesehen, dass das mindestens eine süßende Agens ein Zucker, zum Beispiel Saccharose, Isomaltulose, Glucose, Fructose, Maltose, Lactose oder eine Mischung zweier oder mehrerer davon ist. In einer besonders bevorzugten Ausführungsform ist gemäß der Erfindung jedoch vorgesehen, dass die Schokoladengrundmasse der vorliegenden Erfindung zuckerfrei oder lactosefrei ist.

In einer besonders bevorzugten Ausführungsform wird als süßendes Agens eine Kohlenhydratmischung bevorzugt, insbesondere eine Mischung aus Disacchariden, Nutriose und Polydextrose. Selbstverständlich ist es auch möglich, lediglich Disaccharide allein oder in Mischung einzusetzen, oder eine oder mehrere Disaccharide mit Nutriose und/oder Polydextrose zu kombinieren.

Die Erfindung betrifft selbstverständlich in einer besonders bevorzugten Ausführungsform auch eine erfindungsgemäße Schokoladengrundmasse, die als mindestens ein süßendes Agens mindestens einen Zuckeraustauschstoff und/oder einen Intensivsüßstoff enthalten.

In einer Ausführungsform der Erfindung ist vorgesehen, dass der Zuckeraustauschstoff insbesondere ein Zuckeralkohol ist und insbesondere ausgewählt ist aus der Gruppe bestehend aus Isomalt, 1,1-GPM (1-O-α-D-Glucopyranosyl-D-mannit), 1,6-GPS (6-O-α-D-Glucopyranosyl-D-sorbit), 1,1-GPS (1-O-α-D-Glucopyranosyl-D-sorbit), Maltodextrine, Lactit, Maltit, Erythrit, Xylit, Mannit, Sorbit, Maltitsirup, hydrierte und nichthydrierte Stärkehydrolysate und einer Mischung zweier oder mehrerer davon.

In einer weiteren bevorzugten Ausführungsform ist vorgesehen, dass der Intensivsüßstoff ausgewählt ist aus der Gruppe bestehend aus Sucralose, Natriumcyclamat, Acesulfam K, Neohesperidin-Dihydrochalkon, Glycyrrhizin, Stevia, Stevia mit einem Rebaudiosid-A-Anteil von mindestens 95 Gewichts-%, Steveosid, Monellin, Thaumatin, Aspartam, Dulcin, Saccharin, Naringin-Dihydrochalkon, Neotame und einer Mischung zweier oder mehrerer davon.

In einer besonders bevorzugten Ausführungsform ist die erfindungsgemäße Schokoladenzusammensetzung laktosefrei.

In einer besonders bevorzugten Ausführungsform ist die Schokoladenzusammensetzung laktosefrei, isomaltulosehaltig und zahnschonend.

In einer besonders bevorzugten Ausführungsform ist die erfindungsgemäße Schokoladenzusammensetzung zuckerfrei, insbesondere glucosefrei, saccharosefrei und/oder fructosefrei.

In einer besonders bevorzugten Ausführungsform ist die erfindungsgemäße Schokoladenzusammensetzung diabetikergeeignet und zahnschonend. In einer besonders bevorzugten Ausführungsform der vorliegenden Erfindung ist in der erfindungsgemäßen Schokoladenzusammensetzung als einziges süßendes Agens ein Disaccharidalkohol, ggf. gemeinsam mit einem Intensivsüßstoff vorhanden. In einer besonders bevorzugten Ausführungsform ist in der erfindungsgemäßen Schokoladenzusammensetzung als alleiniges süßendes Agens ein niedrigglycämisches süßendes Agens, insbesondere ein niedrigglycämisches Disaccharid, insbesondere Isomaltulose, ggf. zusammen mit einem Intensivsüßstoff vorhanden.

In einer besonders bevorzugten Ausführungsform ist in der erfindungsgemäßen Schokoladenzusammensetzung als alleiniges süßendes Agens Isomaltulose zusammen mit einem Intensivsüßstoff, optional zusammen mit Inulin, vorhanden.

Die Erfindung sieht in einer besonders bevorzugten Ausführungsform vor, dass das Gewichtsverhältnis der Komponente Schokoladengrundmasse zu der Komponente Reisstärkegel 4,5:1 bis 1,1:1, vorzugsweise 3:1 bis 1,5:1 (jeweils bezogen auf Gesamtgewicht der Komponenten Schokoladengrundmasse und Reisstärkegels) beträgt. In einer besonders bevorzugten Ausführungsform ist vorgesehen, dass das Reisstärkegel 2 bis 20 Gewichts-%, vorzugsweise 3 bis 18 Gewichts-%, insbesondere 5 bis 15 Gewichts-% Reisstärke (bezogen auf Gesamtgewicht des Reisstärkegels) enthält. Die restliche Komponente des Reisstärkegels ist vorzugsweise Wasser und addiert auf 100 Gewichts-% bezogen auf Gesamtgewicht des Reisstärkegels auf.

In einer besonders bevorzugten Ausführungsform weist die Schokoladengrundmasse also mindestens ein süßendes Agens, z. B. ein Kohlenhydrat, mindestens eine Kakaokomponente, Lecithin und Milchpulver auf.

Die Herstellung der erfindungsgemäßen Schokoladengrundmasse kann durch einfaches Mischen der Komponenten, z. B. in einem Lödige-Mischer oder im Wirbelbettverfahren erfolgen, vorzugsweise bei Temperaturen von 30 bis 50°C.

In besonders bevorzugter Weise kann die Schokoladengrundmasse durch Mischen und Walzen klassisch hergestellt sein. In einer besonders bevorzugten Ausführungsform ist die Schokoladengrundmasse, die erfindungsgemäß eingesetzt wird, eine fertige Schokolade, beispielsweise eine solche, die durch Conchieren hergestellt wurde. In besonders bevorzugter Ausführungsform wird eine erfindungsgemäß eingesetzte Schokoladengrundmasse bei insbesondere 40 bis 80°C, vorzugsweise 50 bis 80°C aufgeschmolzen.

Gemäß der Erfindung ist vorgesehen, dass die Schokoladenzusammensetzung 20 bis 50 Gewichts-% Wasser, insbesondere 30 bis 45 Gewichts-%, vorzugsweise 32 bis 44 Gewichts-% Wasser (bezogen auf Gesamtgewicht der Schokoladenzusammensetzung) enthält. Gemäß der Erfindung ist vorgesehen, dass die Schokoladenzusammensetzung 0,5 bis 10 Gewichts-%, vorzugsweise 1 bis 9 Gewichts-%, insbesondere 2 bis 8 Gewichts-% Reisstärke (bezogen auf Gesamtgewicht der Schokoladenzusammensetzung) enthält. Gemäß der Erfindung ist vorgesehen, dass die erfindungsgemäße Schokoladenzusammensetzung 40 bis 80 Gewichts-%, insbesondere 50 bis 70 Gewichts-%, insbesondere 52 bis 65 Gewichts-% Schokoladengrundmasse enthält.

Erfindungsgemäß bevorzugt können als Zusatzstoffe auch Mandelmark, Honig, Kaffeeextrakt und andere feinvermahlene Produkte oder pastöse Substanzen in die Schokoladengrundmasse eingearbeitet werden. In besonders bevorzugter Ausführungsform können auch Stabilisatoren, wie Xanthan, Polysaccharide und Emulgatoren, wie Mono- und Diglyceride oder Saccharosemonofettsäureester eingesetzt werden. Eine Aromatisierung kann in bevorzugter Ausführungsform durch Fruchtzubereitungen oder natürliche und synthetische Aromen vorteilhafterweise und in bevorzugter Ausführungsform vorgenommen werden.

Erfindungsgemäß ist auch eine Pasteurisierung des Fertigproduktes in bevorzugter Ausführungsform möglich.

Im Zusammenhang mit der vorliegenden Erfindung sind sämtliche Gewichts-%-Angaben, insbesondere beschrieben durch die angegebenen Bereiche für die Gewichts-%-Angaben, für Komponenten von Gemischen, insbesondere Schokoladenzusammensetzungen, Schokoladengrundmasse und Reisstärkegel so zu verstehen, dass die im in Bezug genommenen Gemisch vorhandenen Komponenten auf 100 Gewichts-% aufaddieren.

In besonders bevorzugter Ausführungsform ist die erfindungsgemäße Schokoladenzusammensetzung ein Pudding, eine Creme, eine Glasur, ein Brotaufstrich, ein Topping, eine Körperfarbe, eine Kuchenglasur oder eine Trinkschokolade.

In einer besonders bevorzugten Ausführungsform betrifft die vorliegende Erfindung auch Produkte, insbesondere Lebens-, Nahrungs- oder Genussmittel, z. B. Backwaren, Schaumzuckerwaren, Konfekt oder dergleichen, die eine erfindungsgemäße halbfeste oder flüssige Schokoladenzusammensetzung enthalten, vorzugsweise mit dieser beschichtet sind oder diese als Füllung aufweisen. In besonders bevorzugter Ausführungsform weisen derartige erfindungsgemäße Produkte 10 bis 90 Gewichts-%, vorzugsweise 20 bis 80 Gewichts-%, insbesondere 30 bis 70 Gewichts-%, bevorzugt 40 bis 60 Gewichts-% der erfindungsgemäßen Schokoladenzusammensetzung auf.

In einer weiteren Ausführungsform betrifft die vorliegende Erfindung auch ein Verfahren zur Herstellung einer halbfesten oder flüssigen Schokoladenzusammensetzung, wobei in einem ersten Verfahrensschritt eine Schokoladengrundmasse, insbesondere eine erwärmte und aufgeschmolzene Schokoladengrundmasse, und ein Reisstärkegel, vorzugsweise ein erwärmtes Reisstärkegel, bereitgestellt und in einem zweiten Verfahrensschritt das Reisstärkegel in erwärmter Form in die aufgeschmolzene und erwärmte Schokoladengrundmasse eingebracht und zu einer homogenen Mischung vermischt wird, wobei eine homogene, halbfeste oder flüssige Schokoladenzusammensetzung erhalten wird und wobei das Reisstärkegel portionsweise und sequentiell in die Schokoladengrundmasse eingebracht wird. In besonders bevorzugter Ausführungsform wird die Schokoladengrundmasse auf eine Temperatur von 40 bis 80°C, insbesondere 50 bis 70°C erwärmt. In besonders bevorzugter Ausführungsform wird das Reisstärkegel vor Zugabe zu der Schokoladengrundmasse auf eine Temperatur von 60 bis 90°C, insbesondere 70 bis 80°C erwärmt.

In besonders bevorzugter Ausführungsform wird das Reisstärkegel hergestellt, indem Reisstärke mit Wasser bei erhöhter Temperatur, z. B. 60 bis 90°C, vorzugsweise 60 bis 65°C, vermischt wird und ein Gel erhalten wird. Gemäß der Erfindung wird das erwärmte Reisstärkegel portionsweise und sequentiell in die Schokoladengrundmasse eingebracht, z. B. in zwei, drei oder mehr nacheinander folgenden Verfahrensschritten. Besonders bevorzugt wird das Reisstärkegel kontinuierlich in die Schokoladengrundmasse eingebracht. In besonders bevorzugter Ausführungsform findet das Einbringen des Reisstärkegels über einen Zeitraum von 1 bis 60 Minuten, insbesondere 5 bis 30 Minuten, insbesondere 6 bis 20 Minuten, vorzugsweise 7 bis 15 Minuten statt.

In einer besonders bevorzugten Ausführungsform besteht das vorgenannte Verfahren aus den vorgenannten Verfahrensschritten, d. h. es werden keine weiteren Verfahrensschritte zur Herstellung der gebrauchsfertigen, insbesondere trinkfertigen oder glasur- bzw. streichfertigen, Schokoladenzusammensetzung eingesetzt.

Weitere vorteilhafte Ausgestaltungen ergeben sich aus den Unteransprüchen.

Die Erfindung wird anhand der folgenden Beispiele näher erläutert.

### Beispiel 1: Brotaufstrich mit verlängerter Energiefreisetzung

A) 200 g Schokoladengrundmasse wird mit Isomaltulose und Inulin wie folgt hergestellt.
   20 Gewichts-% Kakaopulver (Kessko KP 10/12) werden mit 41,95 Gewichts-% Isomaltulose, 0,05 Gewichts-% Vanilin sowie 5 Gewichts-% Inulin (Orafti® HP) in einem Z-Mischer innig miteinander vermischt. Zu diesem trockenen Gemisch wird eine ausreichende Menge an Fett, nämlich 32,5 Gewichts-% (Kernetta 937, Rau und Neusser, Palmöl) sowie 0,5 Gewichts-% Lecithin gegeben und bei 40°C für 10 Minuten vermischt, so dass sich eine pastöse Mischung ergibt. Die Masse wird anschließend über ein Walzenstuhlsystem bearbeitet und eine Partikelgröße von ≤ 20 µm eingestellt.
   Gewichts-%-Angaben sind jeweils auf Gesamttrockengewicht der Schokoladengrundmasse bezogen.
B) 158 g Reisstärkegel (150 g Wasser und 8 g Remyline AX-DR)
C) Die Schokoladengrundmasse wird in einem thermostatisierbaren Mischer aufgeschmolzen (max. Temperatur 65°C) und das auf 70°C erwärmte Reisstärkegel portionsweise über eine Zeitraum von 15 Minuten dazugeben. Anschließend wird 3 Minuten bei dieser Temperatur weitergerührt und in vorher heiß sterilisierte Gläser abgefüllt.

Das Produkt ist bei Raumtemperatur zart schmelzend und gut streichfähig.

### Beispiel 2: Kuchenglasur

A) 200 g Schokoladengrundmasse mit Saccharose (Puderzucker) wird wie folgt hergestellt.
   Zur Herstellung der Schokoladengrundmasse werden 46,95 Gewichts-% Saccharose mit 20 Gewichts-% Kakaopulver (Kessko KP 10/12) und 0,05 Gewichts-% Vanillin innig in einem Z-Mischer vermischt. Zu diesem trockenen Gemisch wird eine ausreichende Menge von Fett, nämlich 32,5 Gewichts-% Fett (Kernetta 937, Rau und Neusser, Palmöl) sowie 0,5 Gewichts-% Lecithin gegeben und bei 40°C für 10 Minuten vermischt, so dass sich eine pastöse Mischung ergibt. Die Masse wird anschließend über ein Walzenstuhlsystem bearbeitet und eine Partikelgröße von ≤ 20 µm eingestellt.
   Gewichts-%-Angaben sind jeweils auf Gesamttrockengewicht der Schokoladengrundmasse bezogen.
B) 110 g Reisstärkegel (100 g Wasser und 10 g Reisstärke, Remyline AX-DR)
C) Die Schokoladengrundmasse wird in einem thermostatisierbaren Mischer aufgeschmolzen (max. Temperatur 65°C) und das auf 80°C erwärmte Reisstärkegel portionsweise über eine Zeitraum von 15 Minuten dazugeben. Anschließend wird 3 Minuten bei dieser Temperatur weitergerührt und in einen Alubeutel, der anschließend versiegelt wird, abgefüllt.

Das Produkt ist bei Raumtemperatur fest und kann im Wasserbad bei 50 bis 60°C verflüssigt werden. Auf der Kuchenoberfläche verteilt sich das Produkt gleichmäßig und bildet einen glänzenden Film, der anschließend auch gut haftet.

### Beispiel 3: Weihnachts-Schokotrunk

A) 200 g Schokoladengrundmasse mit Isomaltulose und Inulin wird wie folgt hergestellt.
   20 Gewichts-% Kakaopulver (Kessko KP 10/12) werden mit 41,95 Gewichts-% Isomaltulose, 0,05 Gewichts-% Vanilin sowie 5 Gewichts-% Inulin (Orafti® HP) in einem Z-Mischer innig miteinander vermischt. Zu diesem trockenen Gemisch wird eine ausreichende Menge an Fett, nämlich 32,5 Gewichts-% (Kernetta 937, Rau und Neusser, Palmöl) sowie 0,5 Gewichts-% Lecithin gegeben und bei 40°C für 10 Minuten vermischt, so dass sich eine pastöse Mischung ergibt. Die Masse wird anschließend über ein Walzenstuhlsystem bearbeitet und eine Partikelgröße von ≤ 20 µm eingestellt.
   Gewichts-%-Angaben sind jeweils auf Gesamttrockengewicht der Schokoladengrundmasse bezogen.
B) 180 g Reisstärkegel (170 g Wasser und 10 g Reisstärke; Remyline AX-BR)
   2 g Apfel-Zimt-Aroma (Fa. Symrise)
   0,05 g Acesulfam K
C) Die Schokolade wird in einem thermostatisierbaren Mischer aufgeschmolzen (max. Temperatur 65°C), Aroma und Intensivsüßstoff hinzugegeben und das auf 80°C erwärmte Reisstärkegel portionsweise über eine Zeitraum von 15 Minuten dazugeben. Anschließend wird 3 Minuten bei dieser Temperatur weitergerührt, bei 85°C kurzzeitpasteurisiert und in sterile Gefäße abgefüllt.

Das Produkt ist bei Raumtemperatur homogen, sedimentationsstabil und hat einen cremigen und vollen Geschmack. Auch nach drei Monaten Lagerung bei Raumtemperatur ist das Produkt mikrobiologisch stabil und zeigt das vorstehend beschriebene vorteilhafte Geschmacksprofil.

### Beispiel 4:

Die in den Beispielen 1 bis 3 hergestellten Brotaufstriche, Kuchenglasuren und Schokogetränke wurden in analoger Weise auch mit jeweils anderen Schokoladengrundmassen anstelle der in den Beispielen 1 bis 3 angegebenen Schokoladengrundmassen hergestellt.

So wurde eine erste Schokoladengrundmasse mit folgender Rezeptur hergestellt und erfindungsgemäß eingesetzt:
29,93 Gewichts-% Saccharose (Puderzucker)
20 Gewichts-% Kakaopulver
32,5 Gewichts-% Fett
7 Gewichts-% Isomalt ST-PF (Standard, Pulverform)
0,02 Gewichts-% Sucralose
0,5 Gewichts-% Lecithin
0,05 Gewichts-% Vanillin
10 Gewichts-% Orafti® GR (Inulin)

Eine zweite eingesetzte Schokoladengrundmasse wies folgende Zusammensetzung auf:
20 Gewichts-% Kakaopulver
32,5 Gewichts-% Fett
36,908 Geweichts-% Isomalt ST-PF
0,042 Gewichts-% Sucralose
0,5 Gewichts-% Lecithin
0,05 Gewichts-% Vanillin
10 Gewichts-% Orafti® LGI (Inulin)

Eine dritte erfindungsgemäß eingesetzte Schokoladengrundmasse wies folgende Zusammensetzung auf:
20 Gewichts-% Saccharose
20 Gewichts-% Kakaopulver
32,5 Gewichts-% Fett
19,927 Gewichts-% Isomalt ST-PF
0,023 Gewichts-% Sucralose
0,5 Gewichts-% Lecithin
0,05 Gewichts-% Vanillin
7 Gewichts-% Orafti® P95 (Inulin)

Eine vierte eingesetzte Schokoladengrundmasse wies folgende Zusammensetzung auf:
13,64 Gewichts-% Saccharose
18,18 Gewichts-% Kakaopulver
29,02 Gewichts-% Isomalt ST-PF
29,55 Gewichts-% Fett
0,025 Gewichts-% Sucralose
0,45 Gewichts-% Lecithin
0,045 Gewichts-% Vanillin
9,09 Gewichts-% Orafti® HP

Das Kakaopulver und das Fett sind die im Beispiel 1 angegebenen Produkte Kessko KP 10/12 und Kernetta, Rau und Neusser (Palmöl).

Als Lecithin wurde Topicitin NGM, Cargill in allen vier Beispielen eingesetzt.

Die erhaltenen Produkte zeichneten sich durch den genannten Vorteile aus.

## Patentansprüche

1. Halbfeste oder flüssige Schokoladenzusammensetzung, enthaltend 40 bis 80 Gewichts-% einer mindestens eine Kakaokomponente und mindestens ein süßendes Agens enthaltenden Schokoladengrundmasse, 0,5 bis 10 Gewichts-% Reisstärke und 20 bis 50 Gewichts-% Wasser (jeweils bezogen auf Gesamtgewicht der Schokoladenzusammensetzung) hergestellt durch
a) Bereitstellen einer Schokoladengrundmasse und eines Reisstärkegels und
b) Einbringen des Reisstärkegels in die Schokoladengrundmasse und Mischen der beiden Komponenten, wobei eine homogene, halbfeste oder flüssige Schokoladenzusammensetzung erhalten wird, und wobei das Einbringen des Reisstärkegels portionsweise und sequenziell erfolgt.

2. Schokoladenzusammensetzung nach Anspruch 1, wobei das Gewichtsverhältnis der Schokoladengrundmasse zu dem Reisstärkegel 4,5:1 bis 1,1:1 (jeweils bezogen auf Gesamtgewicht der Komponenten) beträgt.

3. Schokoladenzusammensetzung nach Anspruch 1 oder 2, wobei das Reisstärkegel 2 bis 20 Gewichts-% Reisstärke (bezogen auf Gesamtgewicht des Reisstärkegels) enthält.

4. Schokoladenzusammensetzung nach einem der Ansprüche 1 bis 3, wobei diese ein Pudding, eine Creme, eine Glasur, ein Topping, eine Körperfarbe, ein Brotaufstrich oder eine Trinkschokolade ist.

5. Produkt, enthaltend eine halbfeste oder flüssige Schokoladenzusammensetzung nach einem der Ansprüche 1 bis 4.

6. Verfahren zur Herstellung einer halbfesten oder flüssigen Schokoladenzusammensetzung nach einem der vorhergehenden Ansprüche 1 bis 4, wobei in einem ersten Verfahrensschritt eine aufgeschmolzene Schokoladengrundmasse und ein Reisstärkegel bereitgestellt und in einem zweiten Verfahrensschritt das Reisstärkegel in die aufgeschmolzene Schokoladengrundmasse eingebracht und zu einer homogenen Mischung vermischt wird, wobei eine homogene, halbfeste oder flüssige Schokoladenzusammensetzung erhalten wird und wobei das Reisstärkegel portionsweise und sequentiell in die Schokoladengrundmasse eingebracht wird.

7. Verfahren nach Anspruch 6, wobei das bereitgestellte Reisstärkegel vorgewärmt ist.

## Claims

1. Semi-solid or liquid chocolate composition, comprising 40 to 80% by weight of chocolate base mass comprising at least one cocoa component and at least one sweetening agent, 0.5 to 10% by weight of rice starch and 20 to 50% by weight of water (each based on the total weight of the chocolate composition) produced by
a) providing a chocolate base mass and a rice starch gel and
b) introducing the rice starch gel into the chocolate base mass and mixing the two components, wherein a homogenous, semi-solid or liquid chocolate composition is obtained and wherein introducing the rice starch gel is carried out in portions and sequentially.

2. Chocolate composition according to claim 1, wherein the weight ratio of chocolate base mass to rice starch gel is 4.5 : 1 to 1.1 : 1 (in each case based on the total weight of the components).

3. Chocolate composition according to claim 1 or claim 2, wherein the rice starch gel comprises 2 to 20% by weight of rice starch (based on the total weight of the rice starch gel).

4. Chocolate composition according to any one of the claims 1 to 3, wherein the chocolate composition is a pudding, a cream, an icing, a topping, a body paint, a spread or a drinking chocolate.

5. Product, comprising a semi-solid or liquid chocolate composition according to any one of the claims 1 to 4.

6. Method for producing a semi-solid or liquid chocolate composition according to any one of the preceding claims 1 to 4, wherein in a first method step, a molten chocolate base mass and a rice starch gel are provided and in a second method step, the rice starch gel is introduced into the molten chocolate base mass and is mixed to a homogenous mixture, wherein a homogenous, semi-solid or liquid chocolate composition is obtained, and wherein the rice starch gel is introduced in portions and sequentially into the chocolate base mass.

7. Method according to claim 6, wherein the provided rice starch gel is preheated.

## Revendications

1. Composition de chocolat semi-solide ou liquide, contenant de 40 à 80 % en poids d'une masse de base de chocolat contenant au moins un composant de cacao et au moins un agent édulcorant, de 0,5 à 10 % en poids d'amidon de riz, et de 20 à 50 % en poids d'eau (respectivement par rapport au poids total de la composition de chocolat), la composition étant produite par les étapes de
a) fournir une masse de base de chocolat et un gel d'amidon de riz et
b) introduire le gel d'amidon de riz dans la masse de base de chocolat et mélanger les deux composants pour obtenir une composition de chocolat homogène, semi-solide ou liquide, l'introduction du gel d'amidon de riz s'effectuant par portions et de façon séquentielle.

2. Composition de chocolat selon la revendication 1, dans laquelle la proportion pondérale de la masse de base de chocolat par rapport au gel d'amidon de riz est de 4,5 : 1 à 1,1 : 1 (respectivement par rapport au poids total des composants).

3. Composition de chocolat selon la revendication 1 ou 2, dans laquelle le gel d'amidon de riz contient 2 à 20 % en poids d'amidon de riz (par rapport au poids total du gel d'amidon de riz).

4. Composition de chocolat selon l'une quelconque des revendications 1 à 3, la composition étant un pudding, une crème, un glaçage, une garniture, une peinture corporelle, une pâte à tartiner ou un chocolat à boire.

5. Produit contenant une composition de chocolat semi-solide ou liquide selon l'une quelconque des revendications 1 à 4.

6. Procédé pour la fabrication d'une composition de chocolat semi-solide ou liquide selon l'une quelconque des revendications précédentes 1 à 4, dans lequel, dans une première étape du procédé, sont fournis une masse de base de chocolat fondue et un gel d'amidon de riz, et, dans une deuxième étape du procédé, le gel d'amidon de riz est introduit dans la masse de base de chocolat fondue, et les composants sont mélanges pour obtenir un mélange homogène, dans lequel une composition de chocolat homogène, semi-solide ou liquide est obtenue, et dans lequel le gel d'amidon de riz est introduit dans la masse de base de chocolat par portions et de façon séquentielle.

7. Procédé selon la revendication 6, dans lequel le gel d'amidon de riz fourni est préchauffé.
